# EUROPEAN PATENT APPLICATION

(11) **EP 2 843 610 A1**
(43) Date of publication of application: **04.03.2015**
(21) Application number: 14182058.9
(22) Date of filing: 25.08.2014
(51) Int. Cl.: G06Q 30/06

(54) **A method and a system for displaying a plurality of items within a graphical interface**

(30) Priority: 26.08.2013 US 201313975815
(71) Applicant: Prediggo SA, 1015 Lausanne (CH)
(72) Inventor: Pu, Pearl, 1028 Préverenges (CH); Hu, Rong, 1020 Renens (CH); Schickel, Vincent, 1782 Belfaux (CH)
(74) Representative: Bugnion Genève

(57) **Abstract**

A method for displaying a plurality of items within a graphical interface, said method being performed by a computing device which comprises one or more processors, one or more secondary interfaces operatively coupled to at least one of the processors and one or more computer-readable storage media operatively coupled to at least one of the processors.

## Description

### Field of the invention

The present invention concerns the field of graphical interfaces implemented by computing devices. The present invention relates in particular to a method and a system for displaying a plurality of items within a graphical interface.

### Background of the Invention

Nowadays, it has become a usual habit for numerous consumers around the world to purchase products or services via dedicated e-commerce, i.e. online selling, platforms. The number of such online platforms where products and services can be purchased (amazon, online grocery stores, etc.) has therefore exploded over the last twenty years. In some markets, these online platforms have become the favorite, if not the only, means for consumers to purchase products or services. Such online platforms are usually accessible via a dedicated website that can be accessed by users by making use of an internet browser implemented by a computing device (computer, smartphone, pda, etc.). Once connected to the website, the internet browser renders a graphical interface provided by the online platform. This graphical interface is then used by users to interact with the online platform allowing them to submit information (user query) and to retrieve information (query results).

Usually, a purchasing process conducted by a user navigating the website provided by such online platforms starts by a query submitted by the user. Such query usually relates to a product or a type of product that the user is looking for. Most of the websites provided by online platforms thus usually comprise a search bar which allows information to be submitted by users.

In response to a query submitted by a user, online platforms of the prior art usually comprise a recommending system or a search engine that determine, in accordance with the user's submitted query, one or more matching products.

However, the major problem of online platforms of the prior art comes from the way the purchasable items are presented to the user and from the kind of navigating functionalities that are provided by such platforms.

Indeed, it is often the case that, in response to a user-query, the "most pertinent" purchasable product is presented along with a relatively long list of characteristics related to the product. Sometimes, a list of "closely related product" is also presented at the bottom of the page.

A user is thus usually presented with detailed information concerning a single product, information which might be useless to the user, and with a very little amount of information concerning other matching products. Moreover, users have usually no way for determining easily the relationships that might exist between the "firstly presented product" and the "secondly presented products". Thus, it is normally the user that has to compare the characteristics of the "firstly presented product" with those of the "secondly presented products" for determining potential similarities and differences that exist between products.

In addition, online platforms of the prior art usually provide limited functionalities for navigating amongst the proposed products.

Today's most common technique put in place by online platform to help user see product similarity is the "compare button", where two or more products are displayed in a big matrix, where each product feature is a line of the matrix. Unfortunately, this approach only allows the user to compare a few products at a time, requires very good knowledge of the domain to understand the features, and needs big screens to display the entire matrix.

Because of the lack of an adapted way of displaying the products to the users, allowing for example similarities and differences that exist between products to be easily determined, and because of the lack of navigation functionalities, online platforms of the prior art do not optimize the purchasing experience of the user. Graphical interfaces provided by online platforms of the prior art are therefore not optimized in terms of user satisfaction.

The present invention intends to remedy to these drawbacks.

### Summary of the Invention

A first goal of the invention is to provide a method and a system for displaying items within a graphical interface that allows similarities between products to be easily determined.

A second goal of the invention is to provide a method and a system for displaying items within a graphical interface that allows navigation amongst products to be facilitated.

A third goal of the invention is to provide a method and a system for displaying items within a graphical interface that optimizes the purchasing experience of the user.

A fourth goal of the invention is to provide a user with the ability to select one or more items from the collection for further processing.

The following definitions will be used throughout the present specification:

The term "means" and the term "module" are defined as software, computer hardware, graphics hardware, networking hardware, server hardware, electronic hardware, digital electronics and combination thereof.

The term "computing device" is defined as including computers, smartphones, tablets and Personal Digital Assistants (PDA).

The expression "secondary interface" is defined as software, computer hardware, graphics hardware, networking hardware, server hardware, electronic hardware, digital electronics and combinations thereof to which a mice, a trackball, a pointing device or a touch-screen can be connected to thereby provide user input to the computing device.

The term "pictogram" is defined as information that contains at least data in text format and data in picture format.

According to the invention, the method for displaying a plurality of items within a graphical interface, said method being performed by a computing device which comprises one or more processors, one or more secondary interfaces operatively coupled to at least one of the processors and one or more computer-readable storage media operatively coupled to at least one of the processors, comprises the steps of:
- displaying a preferred item in a first manner;
- displaying one or more closely related items, said closely related items being displayed in a second manner;
- in response to receiving, through at least one of the secondary interfaces, user input that indicates selection by the user of the preferred item, displaying a menu including one or more attributes ;
- in response to receiving, through at least one of the secondary interfaces, user input that indicates selection by the user of one of said attributes, replacing said closely related items by one or more relevant items, said relevant items being displayed in the second manner, and displaying one or more selectable options related to said attribute which has been selected; and
- in response to receiving, through at least one of the secondary interfaces, user input that indicates selection by the user of at least one of said options, splitting said relevant items into a first set of relevant items and a second set of relevant items, each one of said relevant items of said first set being displayed in the second manner and each one of said relevant item of said second set being displayed in a third manner.

According to one characteristic of the invention, said step of replacing said closely related items by one or more relevant items can comprise a step of retrieving said one or more relevant items from a recommending module which determines said one or more relevant items.

According to one characteristic of the invention, said method further comprises a step of receiving, through at least one of said secondary interfaces, user input that contains information related to a user query.

According to one characteristic of the invention, said step of displaying said preferred item can comprise a step of retrieving said preferred item from an artificial intelligence based module which determines said preferred item based on said information.

According to one characteristic of the invention, said step of displaying said closely related items can comprise a step of retrieving said closely related items from said artificial intelligence based module which determines said closely related items based on said information.

According to one characteristic of the invention, said first manner can consist in displaying said preferred item in the center of said graphical interface.

According to one characteristic, the method for displaying a plurality of items can further comprise the step of, in response to receiving, through at least one of the secondary interfaces, user input that indicates selection by the user of one of said closely related items, replacing said preferred item by said closely related item.

According to one characteristic of the invention, said first manner can consist in displaying said preferred item in such a way that it is emphasized.

According to one characteristic of the invention, said first manner can consist in displaying said preferred item in an enhanced size.

According to one characteristic of the invention, said first manner can consist in displaying said preferred item in a predetermined color.

According to one characteristic of the invention, said second manner can consist in displaying said closely related items, respectively said relevant items, respectively said relevant items of said first set, at positions distributed around said preferred item.

According to one characteristic of the invention, said second manner can consist in displaying, at positions distributed around said preferred item, items selected from the group consisting in closely related items relevant items and relevant items of said first set.

According to one characteristic of the invention, said second manner can consist in displaying one or more lines, each one of them linking one of said closely related items, respectively one of said relevant items, respectively one of said relevant items of said first set, to said preferred item.

According to one characteristic of the invention, said second manner can consist in displaying one or more lines, each one of them linking said preferred item to one item selected from the group consisting in closely related items, relevant items and relevant items of said first set.

According to one characteristic of the invention, said third manner can consist in displaying each one of said relevant items of said second set in such a way that they are less visible than said relevant items of said first set.

According to one characteristic of the invention, said third manner can consist in displaying each one of said relevant items of said second set without any linking line to said preferred item.

According to one characteristic of the invention, said step of displaying said menu can consist in arranging said menu in such a way that it surrounds said preferred item.

According to one characteristic of the invention, said attributes can include at least a price-related attribute.

According to one characteristic of the invention, said selectable options can include at least a "more expensive" option, a "less expensive" option and a "similar price" option.

According to one characteristic of the invention, each one of said plurality of items can consist in a pictogram representing a purchasable product.

According to one characteristic of the invention, each one of said plurality of items can include at least a picture and a description of a purchasable product.

According to one characteristic, said third manner can consist in displaying each one of said relevant items of said second set with links of various sizes, where the sizes are proportional to some kind of relationship between the items.

A computer system according to the invention comprises one or more processors, one or more computer-readable storage media operatively coupled to at least one of the processors, at least one recommending module, at least one artificial intelligence based module, said computer system being programmed to provide, to a computing device remotely connected to said system via a communication network, a graphical interface in which:
- a preferred item is displayed in a first manner,
- one or more closely related items are displayed in a second manner,
- in response to reception by said computer system of data transmitted by said computing device that indicate selection by the user of the preferred item, a menu including one or more attributes is displayed,
- in response to reception by said computer system of data transmitted by said computing device that indicate selection by the user of one of said attributes, said closely related items are replaced by one or more relevant items, said relevant items being displayed in the second manner, and one or more selectable options related to said attribute which has been selected are displayed and
- in response to reception by said computer system of data transmitted by said computing device that indicate selection by the user of at least one of said options, said relevant items are split into a first set of relevant items and a second set of relevant items, each one of said relevant item of said first set being displayed in the second manner and each one of said relevant item of said second set being displayed in a third manner.

Furthermore, in response to reception by said computer system of data transmitted by said computing device that indicate selection by the user of one of said closely related items, said preferred item can be replaced by said closely related item which has been selected.

A computing device according to the present invention comprises at least one processor that executes computer-executable code stored in memory to provide a graphical interface for displaying a plurality of items,
- means for displaying, in said graphical interface, a preferred item in a first manner,
- means for displaying, in said graphical interface, one or more closely related items, said closely related items being displayed in a second manner,
- means for displaying, in said graphical interface, in response to receiving, through at least one of the secondary interfaces, user input that indicates selection by the user of the preferred item, a menu including one or more attributes,
- means for replacing, in said graphical interface, in response to receiving, through at least one of the secondary interfaces, user input that indicates selection by the user of one of said attributes, said closely related items by one or more relevant items, said relevant items being displayed in the second manner, and displaying one or more selectable options related to said attribute which has been selected and
- means for splitting, in said graphical interface, in response to receiving, through at least one of the secondary interfaces, user input that indicates selection by the user of at least one of said options, said relevant items into a first set of relevant items and a second set of relevant items, each one of said relevant item of said first set being displayed in the second manner and each one of said relevant item of said second set being displayed in a third manner.

According to one characteristic, said computing system can comprise means for replacing, in said graphical interface, in response to receiving, through at least one of the secondary interfaces, user input that indicates selection by the user of one of said closely related items, said preferred item by said closely related item which has been selected.

### Brief description of the drawings

Other advantages and features of the invention will become more clearly apparent from the following description of one embodiment of the invention given as non-restrictive example only and represented in the accompanying drawings in which:
- figure 1 shows a graphical interface presented to a user in an intial phase of the method of the present invention ;
- figure 2 shows a graphical interface presented to the user in a searching phase of the method in accordance with the present invention ;
- figure 3 shows a graphical interface presented to the user in a selection phase of the method in accordance with the present invention ;
- figure 4 shows a graphical interface presented to a user when an attribute is selected in accordance with the method of the present invention ;
- figure 5 shows a graphical interface presented to a user in a recommending phase of the method in accordance with the present invention.

### Detailed description

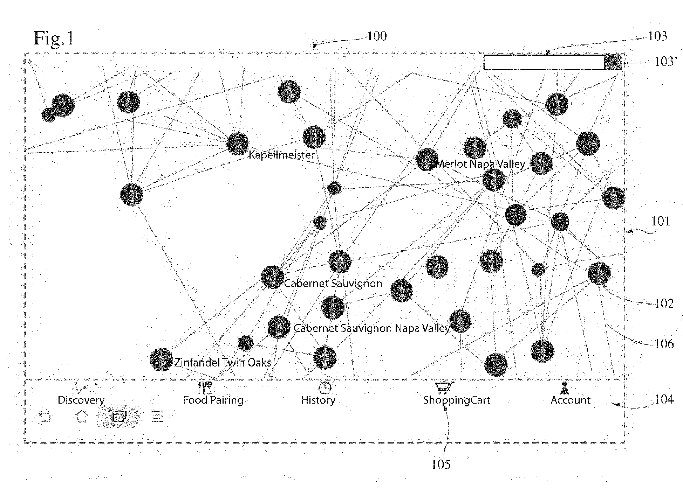

Figure 1 shows a graphical interface 100 implemented according to the method of the present invention. The graphical interface 100 is provided by an online platform, i.e. a computer system dedicated to online commerce, which can be accessed through a dedicated server. In the sense of the present invention, an online platform comprises at least one server, at least one recommending module, which includes at least one artificial intelligence based module, at least one database connected to the server and all the necessary means for connecting the server to a communication network, e.g. Internet. The recommending module can be part of the server of the online platform but it can alternatively be part of an independent server which is connected by a communication network to the server of the online platform.

The graphical interface 100 according to the invention is thus provided by the online platform and displayed on the computing device of the user, either via an internet browser executed on the computing device or via a dedicated software that is executed on the computing device of the user.

In one embodiment, the graphical interface 100 is thus part of the content of a web page. It can be presented on the web page as a fixed-size window or it can fit the whole page of the website. Alternatively, when implemented for tablets in particular, the graphical interface 100 can be displayed in response to execution of dedicated software on the tablet, which software mainly accesses the online platform so as to retrieve the graphical interface 100 which is then displayed on the screen of the tablet.

Once the graphical interface 100 provided by the online platform is displayed on the computing device of the user, some or all operations performed by the user in the graphical interface 100 are transmitted to the online platform, in particular to the server of the online platform, which, in return, transmits to the computing device of the user data necessary for adapting the graphical interface 100 in accordance with the operations that have been performed by the user.

Figure 1 thus shows the graphical interface 100 implemented in accordance with the method of the present invention which is presented to a user when accessing the website of the online platform, via an internet browser, or when starting a dedicated application.

The graphical interface comprises a main window 101, in which a set of purchasable items 102 are displayed, a search bar 103, in which users can input information regarding a purchasable item or a type of purchasable item that they are looking for, and a secondary window 104 in which are displayed selectable icons 105. The dotted frame that delimits the graphical interface 100 on figures 1-5 is just provided for the sake of comprehension but it is not visible to the user.

The purchasable items 102 are shown as nodes linked by edges 106. As it will be described below, the existence of an edge 106 between two items 102 shows that a certain level of similarity exist between these two items 102. Thus, the graphical interface 100 implemented in accordance with the method of the present invention, instead of displaying a list of purchasable items, displays the purchasable items in a graphical way. In particular, the edges 106, which materialize the existence of a similarity between two items, allow a user to determine quickly in the displayed purchasable items those that share common characteristics.

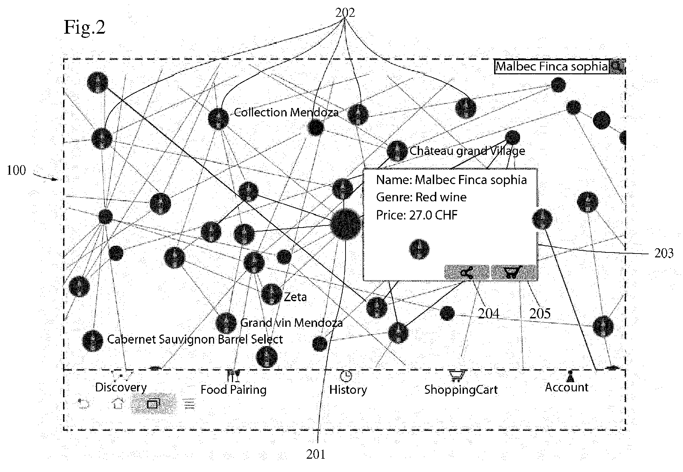

Figure 2 shows the graphical interface 100 implemented in accordance with the method of the method of the present invention when the user has specified in the search bar 103 a search query. As in online platforms of the prior art, a search query can specify a specific purchasable item that the user is looking for or a more generic type of item. In the example shown on figure 2, the online platform is dedicated to wine selling and the user is looking for a wine called "Malbec Finca Sophia". Of course, one of ordinary skilled in the art will consider that the method in accordance with the present invention can be adapted to any kind of purchasable items and can thus be implemented by any online platform dedicated to online commerce.

In order to submit information in the search bar 103, the user makes use of the functionalities provided by the computing device that he is using. Depending on the device, the user can make use of a mice/mouse or trackball connected to the computing device to select the search bar and of a keyboard, also connected to the computing device, to input information. In devices provided with touch-screen functionalities, such as smartphones or tablets, the user selects the search bar by pointing the finger at the position of the search bar and, usually, a virtual keyboard can be used to input information in the search bar. Once all the necessary information have been input in the search bar 103, the user selects a search icon 103' that triggers the search process which is performed by the online platform. Once the user has selected the search icon 103', the server of the online platform determines, based on the information submitted by the user in the search bar 103, a "preferred item" and a set of "closely related items". The server makes use the recommending module, in particular the artificial intelligence based module which determines the "preferred item" and the "closely related items" based on the query submitted by the user. Once the server of the online platform has determined the preferred item and one or more closely related items, it transmits to the computing device of the user data that triggers a rearrangement of the graphical interface 100 in accordance with the result of the submitted query. Therefore, in response to a selection performed by the user of the search icons 103', the graphical interface 100 is dynamically adapted on the computing device of the user to reflect the results of the submitted query, in particular to show the preferred item and the closely related items which have been determined by the recommending module.

Figure 2 shows the graphical interface 100 once it has been rearranged in accordance with the results of the submitted query. The preferred item 201, i.e. the node that corresponds to the preferred item, is preferably displayed in the center of the graphical interface 100. Alternatively, it is displayed in a different color or in a bigger size with respect to the closely related items 202. In any case, the preferred item 201 is always displayed in such a way that it is emphasized with respect to the closely related items 202. As shown on figure 2, a description 203 of the preferred item 201 can be displayed next to it. The description 203 contains a "forward" icon 204 that can be used to forward the description of the preferred item 201 to another user and a "shopping basket" icon 205 that can be selected by the user for placing a buying order with respect to the preferred item 201.

In result to a submitted query, a user is thus presented with the graphical interface 100 shown on figure 2 which displays a preferred item 201 in the center and closely related items surrounding it. The positions of the closely related items 202 in the graphical interface 100 are determined by the recommending module in accordance with the similarities or differences that exist between the closely related items 202 and the preferred item 201. Alternatively, the closely related items 202 are displayed at positions randomly distributed around the preferred item 201. Alternatively, the positions of the closely related items 202 with respect to the preferred item 201, in particular the length of the edges 106, correspond (but it can be another level of correspondence) to the level of similarity that exist between the closely related items 202 and the preferred item 201.

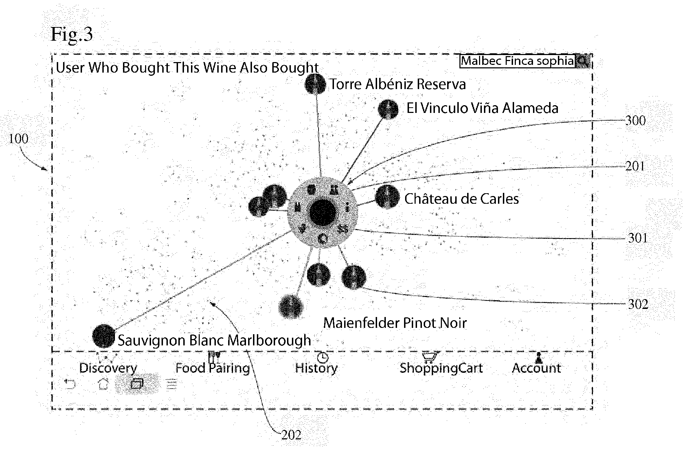

Figure 3 shows the graphical interface 100 when further steps of the method in accordance with the present invention are implemented.

First, in response to a selection of the preferred item 201 performed by the user, the graphical interface 100 is dynamically changed so that a menu 300 containing a set of attributes 301 is shown around the preferred item 201. Again, it is the server of the online platform that receives operations performed by the user and transmits in return data that triggers a rearrangement of the graphical interface 100.

In the example shown on figure 3, the menu 301 is displayed as a circle surrounding the preferred item 201 and it contains seven attributes 301. Alternatively, the menu can be displayed as a square, or a triangle, list surrounding (partially or totally) the preferred item 201 and it can contain more or less than seven attributes. Alternatively, the menu can be displayed in another position of the graphical interface 100, such position being totally remote from the preferred item 201. The attributes 301 contained in the menu 300 are dependent on the type of products which are purchasable on the online platform and can be adapted accordingly. Alternatively, the attributes 301 are determined by the recommending module of the online platform in accordance with the item which has been selected.

Then, in response to a selection of one of the attributes 301, the graphical interface is dynamically changed so that closely related items are displayed as dots while "relevant items" 302 are displayed around the preferred item 201. The relevant items 302 are determined by the recommending module of the online platform in accordance with the attribute 301 which has been selected by the user.

In the example shown on figure 3, the user has first selected the preferred item 201, so as to make the menu 300 appear, and he has then selected the attribute which correspond to the price ($$). The recommending module determines in that case the items which are in the same price range as the preferred item. The relevant items so determined are displayed at positions which are computed by the recommending module as a function of a combination of the attributes 301. Alternatively, positions of the relevant items depend on the attribute 301 which has been selected by the user.

In the present example shown on figure 3, the closest relevant items 302 are those that are the closest in terms of price to the preferred item. The user can thus see immediately similarities and differences that exist between the proposed relevant items 302. Due to the ability to select one attribute amongst a set of several attributes, the user has further the ability to determine similarities and differences in accordance with a set of predefined attributes. Thus, the graphical interface 100 implemented in accordance with the method of the present invention drastically improves the purchasing experience of the user by providing him with a visual way for determining easily similarities and differences amongst items available for purchase.

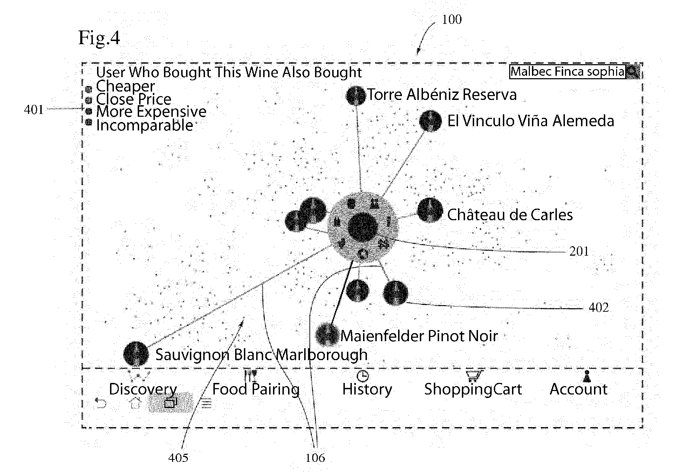

Figure 4 shows the graphical interface 100 when further steps of the method in accordance with the present invention are implemented.

First, when the user selects an attribute 301, the graphical interface 100 is adapted so that a set of selectable options 401 are displayed somewhere in the graphical interface 100. Figure 3 shows the selectable options displayed in top left corner of the graphical interface 100. Alternatively, the selectable options can be displayed at any position of the main window 101 of the graphical interface 100. In the example shown on figure 4, the attribute "Price" 301 ($$) is selected and the displayed selectable options 401 are "cheaper", "close price", "more expansive" and "incomparable". The displayed selectable options 401 thus correspond to the attribute 301 which has been selected. Since different colors are allocated to each one of the selectable options 401, the color of each one of the edges 106 is adapted accordingly.

Then, when the user selects one of the selectable options 401, the graphical interface is dynamically changed so that the relevant items are split into two sets. The relevant items of the first set 402 are similar to the preferred item 201 in terms of the selectable option which has been selected. The relevant items of the second set are not similar to the preferred item 201 in terms of the selectable option 401 which has been selected. The relevant items that are included in the first set are still shown on the graphical interface 100 with edges linking each one of them to the preferred item 201. In contrast, the relevant items of the second set, which are not similar to the preferred item 201 in terms of the selectable option which has been selected, are simply displayed as dots 405.

The graphical interface 100, implemented in accordance with the method of the present invention, thus provides also to the users the ability to filter purchasable items in accordance with a set of predefined pre-defined options. It thus provides to the users an easy way for observing products characteristics, product similarities and differences.

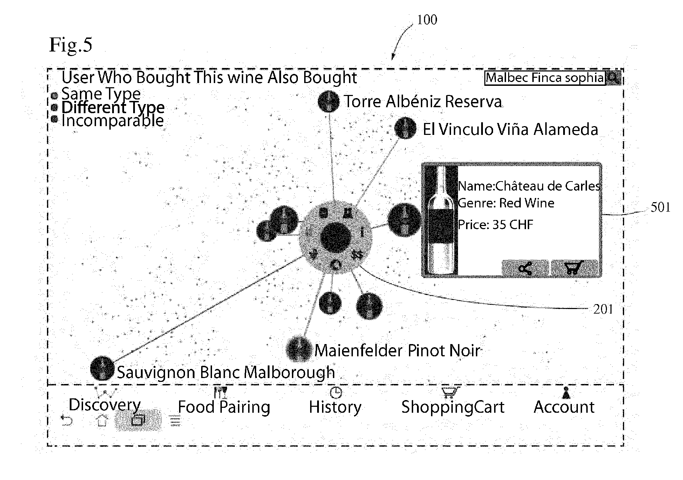

Figure 5 shows the graphical interface 100 when further steps of the method in accordance with the present invention are implemented.

As previously described in relation with figure 2, a preferred item 201, determined by the recommending module of the online platform, is displayed so that it is emphasized with respect to closely related items 202. In this respect, the preferred item 201 can either be displayed in the center of the graphical interface 100, in a bigger size, in a different color, etc. Moreover, as described in relation with figure 3, a preferred item 201 is also emphasized with respect to relevant items 302 and, as described in relation with figure 4, the preferred item 201 is also emphasized with respect to the relevant items of the first set 402.

Above as thus been described what happens when the user selects the preferred item 201, an attribute 301 of the menu 300 and a selectable option 401. However, instead of selecting the preferred item 201, the user can choose to select another item, namely one of the closely related items as described in relation with figure 2, one of the relevant items 302 as described in relation with figure 3 or one of the relevant items of the first set 402 as described in relation with figure 4.

When the user selects one of these items, the graphical interface 100 is dynamically changed so that the item which is selected replaces the preferred item 201. In other terms, the selected item becomes the new preferred item 201 and the previous preferred item becomes one of the closely related items 202, respectively, one of the relevant items 302, respectively, one of the relevant items of the first set 402.

The above described steps (preferred item selection, attribute selection, selectable option selection) can then be performed on the newly defined preferred item.

The graphical interface 100, implemented in accordance with the method of the present invention, thus provides to the user the ability to navigate from one item to the other, taking advantage of the visual information defining similarities between products. Instead of having to starts a search from scratch every time by submitting a new query, the user is thus able to navigate in a set of products which have some kind of relationship between them. This drastically facilitate the purchasing process in the sense that the user is able to navigate in a set of products that are in a way related to the query he submitted and therefore to his personal interests.

In the example shown on figure 5, interpreted in relation with figure 4, one sees that the user has selected the wine called "Chateau de Carles". This item was previously one of the relevant items of the first set 402 (fig.4). Following the selection performed by the user, a description 501 of the selected item is first displayed on the graphical interface 100. If the user confirms selection of this item, for example by selecting the description 501, the selected item replaces the preferred item and is displayed as such. Therefore, when confirming the selection of the item that relates to the wine called "Chateau de Carles", this item will become the new preferred item and will thus be displayed in the center of the graphical interface 100.

## Claims

1. A method for displaying a plurality of items within a graphical interface, said method being performed by a computing device which comprises one or more processors, one or more secondary interfaces operatively coupled to at least one of the processors and one or more computer-readable storage media operatively coupled to at least one of the processors, said method comprising the steps of:
• displaying a preferred item in a first manner;
• displaying one or more closely related items, said closely related items being displayed in a second manner;
• in response to receiving, through at least one of the secondary interfaces, user input that indicates selection by the user of the preferred item, displaying a menu including one or more attributes ;
• in response to receiving, through at least one of the secondary interfaces, user input that indicates selection by the user of one of said attributes, replacing said closely related items by one or more relevant items, said relevant items being displayed in the second manner, and displaying one or more selectable options related to said attribute which has been selected; and
• in response to receiving, through at least one of the secondary interfaces, user input that indicates selection by the user of at least one of said options, splitting said relevant items into a first set of relevant items and a second set of relevant items, each one of said relevant items of said first set being displayed in the second manner and each one of said relevant item of said second set being displayed in a third manner.

2. The method of claim 1, wherein said step of replacing said closely related items by one or more relevant items comprises a step of retrieving said one or more relevant items from a recommending module which determines said one or more relevant items.

3. The method of claim 1, further comprising a step of receiving, through at least one of said secondary interfaces, user input that contains information related to a user query.

4. The method of claim 1, wherein said step of displaying said preferred item comprises a step of retrieving said preferred item from an artificial intelligence based module which determines said preferred item based on said information.

5. The method of claim 4, wherein said step of displaying said closely related items comprises a step of retrieving said closely related items from said artificial intelligence based module which determines said closely related items based on said information.

6. The method of claim 1, further comprising the step of, in response to receiving, through at least one of the secondary interfaces, user input that indicates selection by the user of one of said closely related items, replacing said preferred item by said closely related item.

7. The method of claim 1, wherein said first manner consists in displaying said preferred item in such a way that it is emphasized.

8. The method of claim 1, wherein said first manner consists in displaying said preferred item in an enhanced size.

9. The method of claim 1, wherein said first manner consists in displaying said preferred item in a predetermined color.

10. The method of claim 1, wherein said second manner consists in displaying said closely related items, respectively said relevant items, respectively said relevant items of said first set, at positions distributed around said preferred item.

11. The method of claim 1, wherein said second manner consists in displaying one or more lines, each one of them linking one of said closely related items, respectively one of said relevant items, respectively one of said relevant items of said first set, to said preferred item.

12. The method of claim 1, wherein said third manner consists in displaying each one of said relevant items of said second set in such a way that they are less visible than said relevant items of said first set.

13. The method of claim 1, wherein said third manner consists in displaying each one of said relevant items of said second set without any linking line to said preferred item.

14. The method of claim 1, wherein said step of displaying said menu consists in arranging said menu in such a way that it surrounds said preferred item.

15. The method of claim 1, wherein said attributes include at least a price-related attribute.

16. The method of claim 1, wherein said selectable options include at least a "more expensive" option, a "less expensive" option and a "similar price" option.

17. The method of claim 1, wherein each one of said plurality of items consists in a pictogram representing a purchasable product.

18. The method of claim 1, wherein each one of said plurality of items includes at least a picture and a description of a purchasable product.

19. A computer system comprising one or more processors, one or more computer-readable storage media operatively coupled to at least one of the processors, at least one recommending module, at least one artificial intelligence based module, said system being programmed to provide, to a computing device remotely connected to said system via a communication network, a graphical interface in which:
• a preferred item is displayed in a first manner,
• one or more closely related items are displayed in a second manner,
• in response to reception by said computer system of data transmitted by said computing device that indicate selection by the user of the preferred item, a menu including one or more attributes is displayed,
• in response to reception by said computer system of data transmitted by said computing device that indicate selection by the user of one of said attributes, said closely related items are replaced by one or more relevant items, said relevant items being displayed in the second manner, and one or more selectable options related to said attribute which has been selected are displayed and
• in response to reception by said computer system of data transmitted by said computing device that indicate selection by the user of at least one of said options, said relevant items are split into a first set of relevant items and a second set of relevant items, each one of said relevant item of said first set being displayed in the second manner and each one of said relevant item of said second set being displayed in a third manner.

20. A computing device which comprises at least one processor that executes computer-executable code stored in memory to provide a graphical interface for displaying a plurality of items,
• means for displaying, in said graphical interface, a preferred item in a first manner,
• means for displaying, in said graphical interface, one or more closely related items, said closely related items being displayed in a second manner,
• means for displaying, in said graphical interface, in response to receiving, through at least one of the secondary interfaces, user input that indicates selection by the user of the preferred item, a menu including one or more attributes,
• means for replacing, in said graphical interface, in response to receiving, through at least one of the secondary interfaces, user input that indicates selection by the user of one of said attributes, said closely related items by one or more relevant items, said relevant items being displayed in the second manner, and displaying one or more selectable options related to said attribute which has been selected and
• means for splitting, in said graphical interface, in response to receiving, through at least one of the secondary interfaces, user input that indicates selection by the user of at least one of said options, said relevant items into a first set of relevant items and a second set of relevant items, each one of said relevant item of said first set being displayed in the second manner and each one of said relevant item of said second set being displayed in a third manner.
